# EUROPEAN PATENT APPLICATION

(11) **EP 4 645 957 A1**
(43) Date of publication of application: **05.11.2025**
(21) Application number: 24779086.8
(22) Date of filing: 04.03.2024
(51) Int. Cl.: H04W 36/30, H04W 4/30, H04W 24/08, H04W 36/34

(54) **MOBILE BODY RADIO COMMUNICATION PERFORMANCE ESTIMATION SYSTEM AND METHOD**

(30) Priority: 29.03.2023 JP 2023052775
(71) Applicant: National Institute of Information and Communications Technology, Koganei-shi, Tokyo 184-8795 (JP)
(72) Inventor: OHORI Fumiko, Koganei-shi, Tokyo 184-8795 (JP); ITAYA Satoko, Koganei-shi, Tokyo 184-8795 (JP); OSUGA Toru, Koganei-shi, Tokyo 184-8795 (JP); MATSUMURA Takeshi, Koganei-shi, Tokyo 184-8795 (JP)
(74) Representative: Rings, Rolf
(86) International application number: PCT/JP2024/007929
(87) International publication number: WO 2024/202948

(57) **Abstract**

[Problem]

Switching to an access point is achieved while maintaining communication quality as much as possible without causing extra information exchange.

[Solution]

A mobile body wireless communication performance estimation system 1 measures radio wave strength of a packet wirelessly communicated mutually between any of access points 2 and a mobile body 3, determines whether or not each radio wave strength measured is equal to or more than a first threshold for each of a plurality of packets included in one measurement slot, and identifies any of a communication-enabled state or a communication-disrupted state in units of measurement slots based on a determination result for each packet determined. The identification is performed based on whether or not a previous measurement slot immediately before in chronological order is in a communication-disrupted state, and whether or not the packets rise to equal to or more than the first threshold in a current measurement slot as an identification target.

## Description

### TECHNICAL FIELD

The present invention relates to a mobile body wireless communication performance estimation system and a mobile body wireless communication performance estimation method for estimating the wireless communication performance of a mobile body relative to each access point.

### BACKGROUND ART

At manufacturing sites, the introduction of an automated transportation system (mobile body) controlled wirelessly, such as an automated guided vehicle (AGV) and a stacker crane, is progressing. In the automated transportation system, a plurality of access points are installed at a manufacturing site, and a mobile body communicates wirelessly with each access point while moving under this environment. At this time, when the mobile body leaves a communication-enabled area of an access point to which it is wirelessly connected and moves to a communication-enabled area of another access point, it is necessary to switch the access point to which the mobile body is wirelessly connected.

In order to maintain communication quality as much as possible even when the access point to which the mobile body is wirelessly connected is switched, it is necessary to keep a period for which wireless communication is disconnected for switching to a minimum. For example, a method is considered in which the access point side issues a switch instruction when a mobile body enters a specific area by periodically transmitting its own position information by the mobile body to the access points. However, in the method, extra data exchange happens because the position information must be transmitted periodically from the mobile body to the access points.

Patent Document 1 discloses a technique for shortening the disconnection time by using a control channel to notify the link quality of a channel between access points and a mobile body. In addition, Patent Document 2 discloses a technique that predicts in advance whether a mobile body will move outside a communication-enabled area of an access point after a certain period based on the distance and radio wave strength between the access point and the mobile body and disconnects communication with the access point from the mobile body when the mobile body is positioned outside the communication-enabled area. Furthermore, the technique disclosed in Patent Document 3 intends to resolve the problem of continuous communication with distant access points in a low-quality communication state by changing the access point to be connected based on the wireless communication quality obtained by the mobile body side.

Patent Document 1: JP-A-2005-176336
Patent Document 2: JP-A-2021-069018
Patent Document 3: JP-A-2020-028004

### DISCLOSURE OF THE INVENTION

### PROBLEMS TO BE SOLVED BY THE INVENTION

However, in the technique disclosed in Patent Document 1, it is assumed that there are two channels, a data transmission channel and a control channel. In view of this, there has been a problem that it cannot be applied when only one wireless interface can be secured between the access points and the mobile body. In addition, according to the technique disclosed in Patent Document 2, it is assumed that the position of the mobile body is obtained and the distance to the access point after moving for a certain period can be predicted. In view of this, when the mobile body moves between indoor and outdoor locations, positioning systems are mixed, and moreover, their positioning accuracy is different. Therefore, it cannot be applied to the identification of wireless communication performance through one type of threshold. Furthermore, in the technique disclosed in Patent Document 3, it is necessary to transmit information obtained by the mobile body side to the access points. Therefore, there may be a case where extra information exchange happens, which causes an interference wave to the original wireless communication.

Therefore, the present invention has been made in consideration of the above-described problems, and an object of the present invention is to provide a mobile body wireless communication performance estimation system and method that allow switching to a subsequent access point to be achieved by identifying wireless communication performance between a mobile body and an access point and determining whether or not the mobile body itself is positioned near the boundary of a communication-enabled area of the access point while maintaining communication quality as much as possible and further reducing a period for which wireless communication is disconnected without causing extra information exchange.

### SOLUTIONS TO THE PROBLEMS

A mobile body wireless communication performance estimation system according to a first invention estimates wireless communication performance of a mobile body relative to respective access points. The mobile body wireless communication performance estimation system includes radio wave strength measuring means, first threshold determining means, and communication state identification means. The radio wave strength measuring means measures radio wave strength of a packet wirelessly communicated mutually between any of the access points and the mobile body. The first threshold determining means determines whether or not each radio wave strength measured by the radio wave strength measuring means is equal to or more than a first threshold for each of a plurality of packets included in one measurement slot. The communication state identification means identifies any of a communication-enabled state or a communication-disrupted state in units of the measurement slots based on a determination result for each packet determined by the first threshold determining means. The communication state identification means: identifies a current measurement slot as being in a communication-disrupted state when a previous measurement slot immediately before in chronological order is in a communication-disrupted state and when all packets fall below the first threshold in the current measurement slot as an identification target; identifies the current measurement slot as being in a communication-enabled state when the previous measurement slot is in a communication-disrupted state and when one or more packets rise to equal to or more than the first threshold in the current measurement slot; identifies the current measurement slot as being in a communication-enabled state when the previous measurement slot is in a communication-enabled state and when all packets rise to equal to or more than the first threshold in the current measurement slot; and identifies the current measurement slot as being in a communication-disrupted state when the previous measurement slot is in a communication-enabled state and when no packets rising to equal to or more than the first threshold are received in the current measurement slot.

The mobile body wireless communication performance estimation system according to a second invention, which is in the first invention, includes transition count measuring means and wireless communication performance estimation means. The transition count measuring means measures a count of transitions between a communication-enabled state and a communication-disrupted state within a threshold calculation period constituted of a plurality of consecutive measurement slots. The wireless communication performance estimation means estimates that wireless communication performance is abnormal when a count of transitions measured by the transition count measuring means is equal to or more than a second threshold and estimates that wireless communication performance is normal when the count of transitions is less than the second threshold.

In the mobile body wireless communication performance estimation system according to a third invention, which is in the second invention, the transition count measuring means measures a count of transitions within the threshold calculation period a plurality of times while causing the mobile body to travel in advance and sets a maximum value of measured counts of transitions as the second threshold.

In the mobile body wireless communication performance estimation system according to a fourth invention, which is in the third invention, the transition count measuring means sets a value obtained by further adding an offset value to a maximum value of measured counts of transitions as the second threshold.

The mobile body wireless communication performance estimation system according to a fifth invention, which is in the second, further includes switching control means that switches and controls an access point that wirelessly communicates with the mobile body, based on an estimation result by the wireless communication performance estimation means.

A mobile body wireless communication performance estimation method according to a sixth invention estimates wireless communication performance of a mobile body relative to respective access points. The mobile body wireless communication performance estimation method includes: a radio wave strength measuring step of measuring radio wave strength of a packet wirelessly communicated mutually between any of the access points and the mobile body; a first threshold determining step of determining whether or not each radio wave strength measured in the radio wave strength measuring step is equal to or more than a first threshold for each of a plurality of packets included in one measurement slot; and a communication state identification step of identifying any of a communication-enabled state or a communication-disrupted state in units of the measurement slots based on a determination result for each packet determined in the first threshold determining step. In the communication state identification step, a current measurement slot is identified as being in a communication-disrupted state when a previous measurement slot immediately before in chronological order is in a communication-disrupted state and when all packets fall below the first threshold in the current measurement slot as an identification target, the current measurement slot is identified as being in a communication-enabled state when the previous measurement slot is in a communication-disrupted state and when one or more packets rise to equal to or more than the first threshold in the current measurement slot, the current measurement slot is identified as being in a communication-enabled state when the previous measurement slot is in a communication-enabled state and when all packets rise to equal to or more than the first threshold in the current measurement slot, and the current measurement slot is identified as being in a communication-disrupted state when the previous measurement slot is in a communication-enabled state and when no packets rising to equal to or more than the first threshold are received in the current measurement slot.

### EFFECTS OF THE INVENTION

The present invention constituted of the above-described configurations allows switching to a subsequent access point to be achieved by identifying wireless communication performance between the mobile body and the access point and determining whether or not the mobile body itself is positioned near the boundary of a communication-enabled area of the access point while maintaining communication quality as much as possible and further reducing a period for which wireless communication is disconnected without causing extra information exchange.

### BRIEF DESCRIPTION OF THE DRAWINGS

Fig. 1 is a diagram illustrating an assumed environment of a mobile body wireless communication performance estimation system 1 to which the present invention is applied.
Fig. 2(a) is a diagram illustrating a block configuration when the communication state of wireless communication is identified on an access point side, and Fig. 2(b) is a diagram illustrating a block configuration when the communication state of wireless communication is identified on a mobile body side.
Fig. 3 is a block configuration diagram of a sensor system.
Fig. 4 is a diagram for describing a processing operation in a first threshold determining unit and a state identification unit.
Fig. 5 is a diagram illustrating an example of identifying a communication-enabled state or a communication-disrupted state in units of measurement slots.
Fig. 6 is a diagram for describing the details of a state identification method of a current measurement slot as an identification target.
Fig. 7(a) is a diagram illustrating an example in which a mobile body is positioned within a wireless communication area of an access point, and Fig. 7(b) is a diagram illustrating an example in which the mobile body is positioned near the boundary of the wireless communication area between access points.
Fig. 8 is a diagram illustrating a specific method for determining the normality of wireless communication performance.

### DESCRIPTION OF PREFERRED EMBODIMENTS

The following describes a mobile body wireless communication performance estimation system 1 to which the present invention is applied in detail with reference to the drawings.

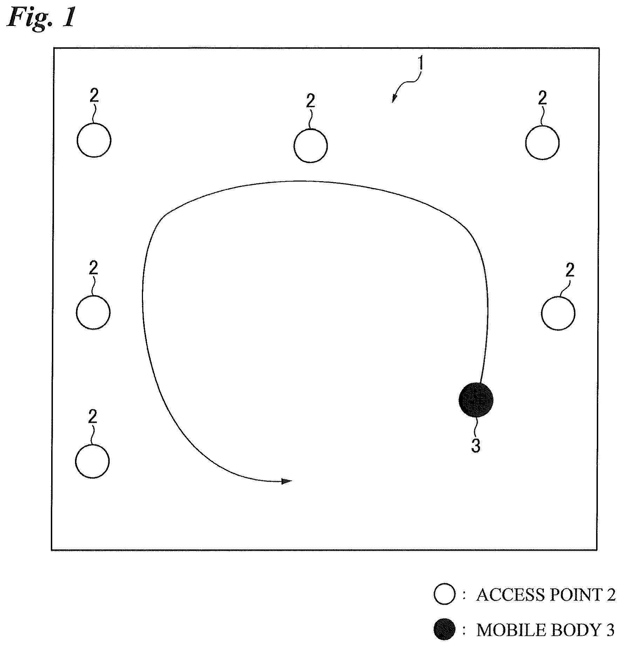

Fig. 1 is a diagram illustrating an assumed environment of the mobile body wireless communication performance estimation system 1 to which the present invention is applied. The mobile body wireless communication performance estimation system 1 includes access points 2 scattered at a plurality of locations and a mobile body 3 that moves freely in an area where the access points 2 are scattered.

The access point 2 is connected to, for example, manufacturing equipment in factories and the like and inspection equipment for inspecting the manufacturing equipment and plays a role as a so-called base station that wirelessly communicates with the mobile body 3. In addition, the access point 2 plays a role as an interface with public communication networks, such as the Internet. That is, the access point 2 can also serve as relay means to enable the mobile body 3 to transmit and receive wireless signals to and from public communication networks, such as the Internet, via the access point 2.

The mobile body 3 is a wireless communication device controlled wirelessly, such as an automated guided vehicle (AGV) and a stacker crane traveling within a factory. The mobile body 3 includes transportation means and wireless communication means that are not illustrated. As the wireless communication means, any configuration in which a well-known wireless communication technique is implemented may be embodied as long as wireless communication with the access points 2 is allowed. As the wireless communication means, for example, a mobile phone, a smartphone, a mobile personal computer (PC), a tablet terminal, and a wearable device may be applied.

The access points 2 and the mobile body 3 are not limited to those installed in manufacturing lines of factories and the like and may be arranged at any other location.

The mobile body wireless communication performance estimation system 1 identifies the communication state of wireless communication performed between the access points 2 and the mobile body 3. The identification of the communication state may be performed on the access point 2 side or on the mobile body 3 side.

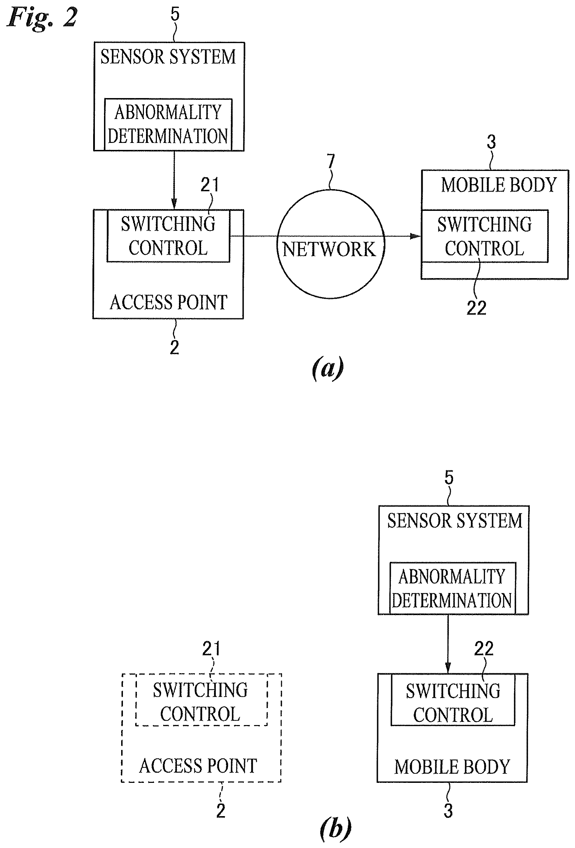

Fig. 2(a) is a diagram illustrating a block configuration when the communication state of wireless communication is identified on the access point 2 side. The access point 2 includes a switching control unit 21. In addition, a sensor system 5 is further connected to the access point 2. The access point 2 is wirelessly connected to the mobile body 3 via a short-range wireless network 7. Similarly, a switching control unit 22 is provided on the mobile body 3 side.

Fig. 2(b) is a diagram illustrating a block configuration when the communication state of wireless communication is identified on the mobile body 3 side. In this case, the sensor system 5 is connected to the mobile body 3. The access point 2 is wirelessly connected to the mobile body 3 via the short-range wireless network 7.

The switching control units 21 and 22 control switching of the access point to be wirelessly connected when the mobile body 3 leaves a communication-enabled area of the access point 2 to which it is wirelessly connected and moves to a communication-enabled area of another access point 2.

The sensor system 5 measures the radio wave strength of a packet wirelessly communicated mutually, identifies the communication state, and estimates wireless communication performance.

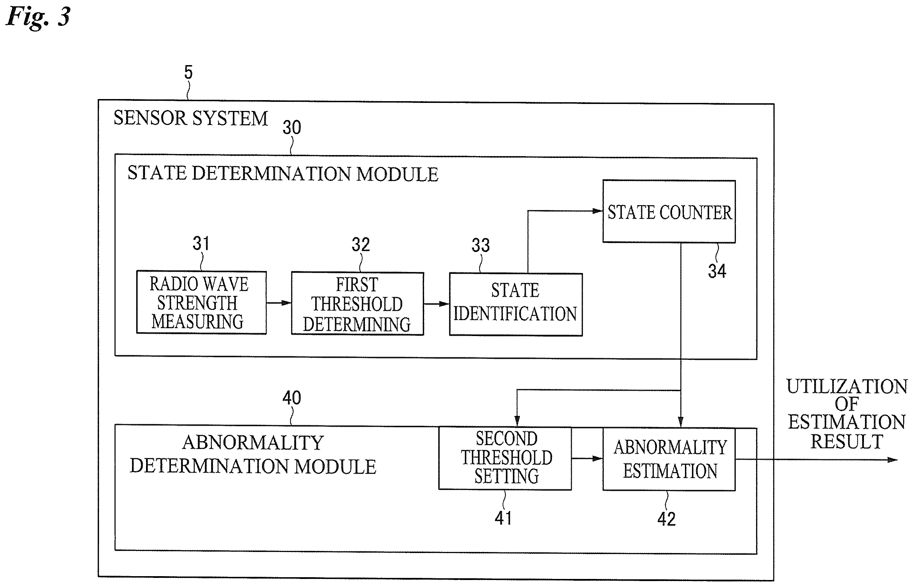

Fig. 3 illustrates a block configuration of the sensor system 5. The sensor system 5 includes a state determination module 30 and an abnormality determination module 40 in a broadly divided manner.

The state determination module 30 includes a radio wave strength measuring unit 31, a first threshold determining unit 32 connected to the radio wave strength measuring unit 31, a state identification unit 33 connected to the first threshold determining unit 32, and a state counter 34 connected to the state identification unit 33.

The abnormality determination module 40 includes a second threshold setting unit 41 and an abnormality estimation unit 42, which are each connected to the state counter 34 in the state determination module 30. The second threshold setting unit 41 and the abnormality estimation unit 42 are connected to one another.

The radio wave strength measuring unit 31 has an antenna (not illustrated) that receives the radio wave of a received packet and has a function of measuring the radio wave strength of the received packet via the antenna (not illustrated). The radio wave strength measuring unit 31 measures the radio wave strength each time a packet is received and transmits the measurement result to the first threshold determining unit 32.

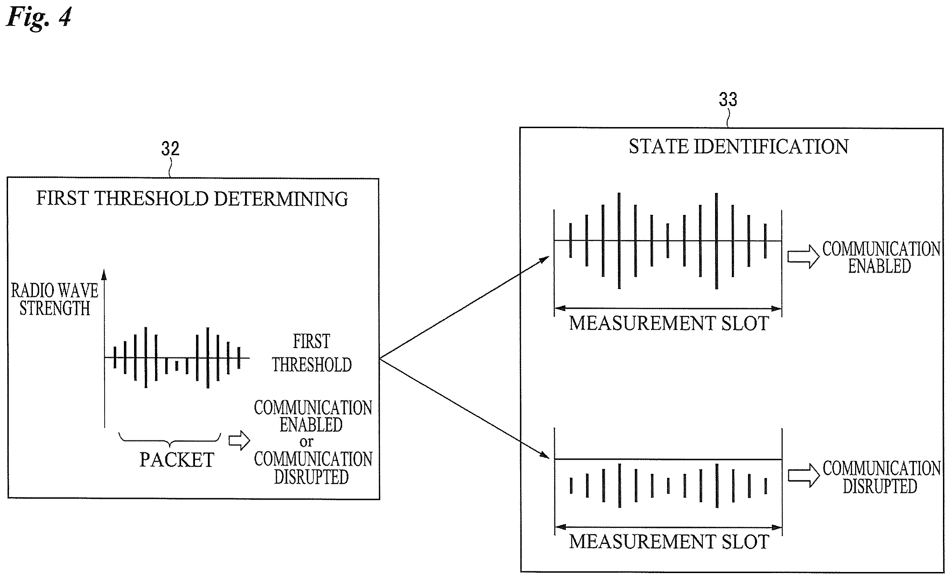

The radio wave strength of each packet measured by the radio wave strength measuring unit 31 is transmitted to the first threshold determining unit 32 each time. The first threshold determining unit 32 compares the transmitted radio wave strength with a first threshold obtained in advance, as illustrated in Fig. 4. Then, the first threshold determining unit 32 determines whether or not the radio wave strength of each packet is equal to or more than the first threshold. The first threshold determining unit 32 notifies the state identification unit 33 of the determination result of the radio wave strength for each packet.

The state identification unit 33 is notified of the determination result of the radio wave strength for each packet from the first threshold determining unit 32. The state identification unit 33 aggregates the determination result of the radio wave strength for each packet in units of measurement slots constituted of a plurality of respective packets. Then, any of a communication-enabled state or a communication-disrupted state is identified in units of measurement slots. The communication-enabled state is a state where the access points 2 and the mobile body 3, which are currently communicating wirelessly, can wirelessly communicate stably with one another. The communication-disrupted state means that the access points 2 and the mobile body 3, which are currently communicating or currently attempting to communicate, cannot wirelessly communicate stably with one another, or the communication is in a disrupted state.

The state identification unit 33 performs the state identification of any of the communication-enabled state or the communication-disrupted state based not only on the relationship between the radio wave strength of one packet and the first threshold but also on the relationship between the radio wave strength of all packets included in the measurement slot and the first threshold. An identification method by the state identification unit 33 will be described in detail in a latter part. The state identification unit 33 transmits the result of the state identification to the state counter 34 in units of measurement slots.

The state counter 34 accumulates and aggregates the result of the state identification for each measurement slot transmitted from the state identification unit 33. The state counter 34 repeatedly executes the accumulation of the results of the state identification for the number of a plurality of measurement slots corresponding to a threshold calculation period and the transmission of the results to the second threshold setting unit 41. In addition, when the results of the state identification between the access point 2 and the mobile body 3, on which the identification of the communication state of wireless communication is actually performed, are transmitted to the state counter 34, the state counter 34 accumulates the results of the state identification for the number of the plurality of measurement slots corresponding to the threshold calculation period and transmits the results to the abnormality estimation unit 42.

The results of the state identification for the number of the plurality of measurement slots corresponding to the threshold calculation period are transmitted from the state counter 34 to the second threshold setting unit 41. The second threshold setting unit 41 sets a second threshold based on the transmitted state identification results for the respective measurement slots during the threshold calculation period. A detailed setting method of the second threshold will be described in detail in the latter part.

The results of the state identification for the respective measurement slots corresponding to the threshold calculation period, on which the identification of the communication state of wireless communication is actually performed, are transmitted from the state counter 34 to the abnormality estimation unit 42. In addition, the second threshold set in the second threshold setting unit 41 is transmitted to the abnormality estimation unit 42. The abnormality estimation unit 42 estimates whether wireless communication performance is normal or abnormal based on the results of the state identification for the respective measurement slots for the threshold calculation period and the second threshold. The details of the estimation method will be described in detail in the latter part.

The sensor system 5 constituted of the above-described configurations is connected on the access point 2 side as illustrated in Fig. 2(a), and accordingly, the wireless communication performance can be estimated on the access point 2 side based on the radio wave strength of the packets received from the mobile body 3. On the other hand, the sensor system 5 constituted of the above-described configurations is connected on the mobile body 3 side as illustrated in Fig. 2(b), and accordingly, the wireless communication performance can be estimated on the mobile body 3 side based on the radio wave strength of the packets received from the access point 2.

Next, the operation of the mobile body wireless communication performance estimation system 1 to which the present invention is applied will be described.

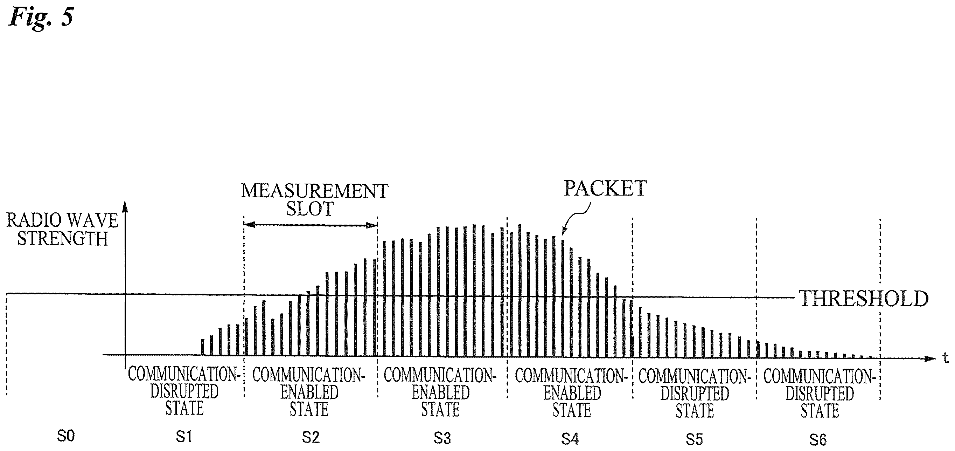

First, the radio wave strength of each received packet is measured by the radio wave strength measuring unit 31 in the sensor system 5. Then, the first threshold determining unit 32 determines whether the radio wave strength of each packet is equal to or more than the first threshold or is less than the first threshold. Next, the state identification unit 33 identifies any of a communication-enabled state or a communication-disrupted state in units of measurement slots constituted of a plurality of packets. Fig. 5 illustrates an example of identifying a communication-enabled state or a communication-disrupted state in units of measurement slots. The state identification unit 33 specifies the communication-enabled state or the communication-disrupted state after considering the situation as to whether or not the radio wave strength of a packet exceeds the first threshold, not for each packet, but for all the packets constituting the measurement slot.

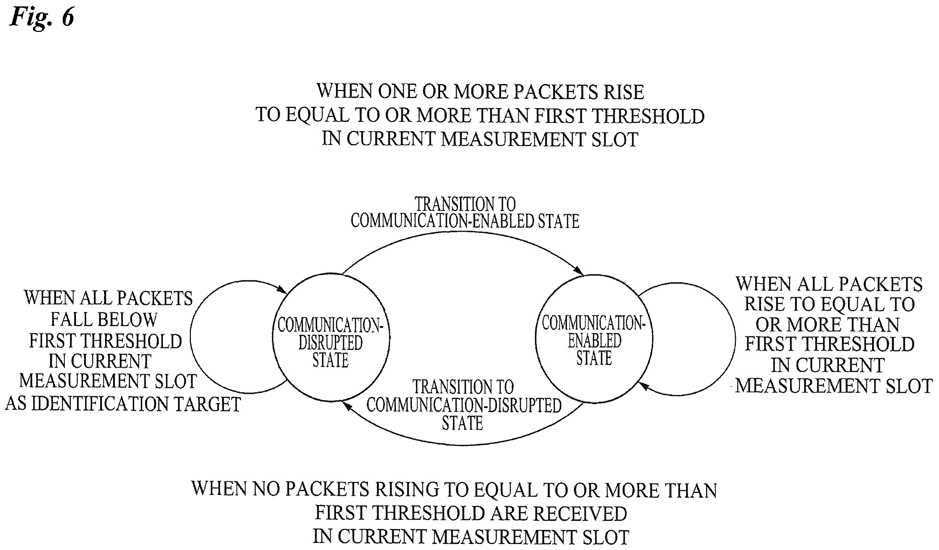

At this time, as illustrated in Fig. 6, the state identification of a current measurement slot as an identification target may be performed based on whether a previous measurement slot immediately before in chronological order is in a communication-disrupted state or a communication-enabled state.

When the previous measurement slot immediately before in chronological order is in a communication-disrupted state and when all packets fall below the first threshold in the current measurement slot as an identification target, in other words, when no packets rising to equal to or more than the first threshold are received in the current measurement slot, the current measurement slot is identified as being in a communication-disrupted state.

In addition, when the previous measurement slot is in a communication-disrupted state and when one or more packets rise to equal to or more than the first threshold in the current measurement slot, the current measurement slot is identified as being in a communication-enabled state.

When the previous measurement slot is in a communication-enabled state and when all packets rise to equal to or more than the first threshold in the current measurement slot, in other words, when at least one packet rising to equal to or more than the first threshold is received in the current measurement slot and when no packets falling below the first threshold are received in the measurement slot, the current measurement slot is identified as being in a communication-enabled state.

Furthermore, when the previous measurement slot is in a communication-enabled state and when no packets rising to equal to or more than the first threshold are received in the current measurement slot and the current measurement slot, the current measurement slot is identified as being in a communication-disrupted state.

In the example illustrated in Fig. 5, when the current measurement slot is a measurement slot S1, all packets fall below the first threshold. Assuming that a previous measurement slot S0 immediately before the measurement slot S1 is in a communication-disrupted state, the measurement slot S1 is identified as being in a communication-disrupted state.

Next, a measurement slot S2 becomes the current measurement slot and corresponds to the case where the previous measurement slot (measurement slot S1) is in a communication-disrupted state and the case where one or more packets rise to equal to or more than the first threshold in the current measurement slot. Therefore, from the measurement slot S1 to the measurement slot S2, the communication-disrupted state transitions to the communication-enabled state.

Next, a measurement slot S3 becomes the current measurement slot and corresponds to the case where the previous measurement slot (measurement slot S2) is in a communication-enabled state and the case where all packets rise to equal to or more than the first threshold in the current measurement slot. Accordingly, the measurement slot S3 continues to be in a communication-enabled state.

Next, a measurement slot S4 becomes the current measurement slot and corresponds to the case where the previous measurement slot (measurement slot S3) is in a communication-enabled state and the case where all packets rise to equal to or more than the first threshold in the current measurement slot. Accordingly, the measurement slot S4 continues to be in a communication-enabled state.

Next, a measurement slot S5 becomes the current measurement slot and corresponds to the case where the previous measurement slot (measurement slot S4) is in a communication-enabled state and the case where no packets rising to equal to or more than the first threshold are received in the current measurement slot and the current measurement slot. Accordingly, the measurement slot S5 is in a communication-disrupted state. Therefore, from the measurement slot S4 to the measurement slot S5, the communication-enabled state transitions to the communication-disrupted state.

Furthermore, when the current measurement slot is a measurement slot S6, all packets fall below the first threshold. Since the previous measurement slot S5 immediately before the measurement slot S6 is in a communication-disrupted state, the measurement slot S6 continues to be in a communication-disrupted state.

Thus, the state identification of the communication-enabled state or the communication-disrupted state is executed for each measurement slot in the state identification unit 33. Based on the state identification, the wireless communication performance between the access point 2 and the mobile body 3, which are currently communicating, may further be estimated in the abnormality estimation unit 42.

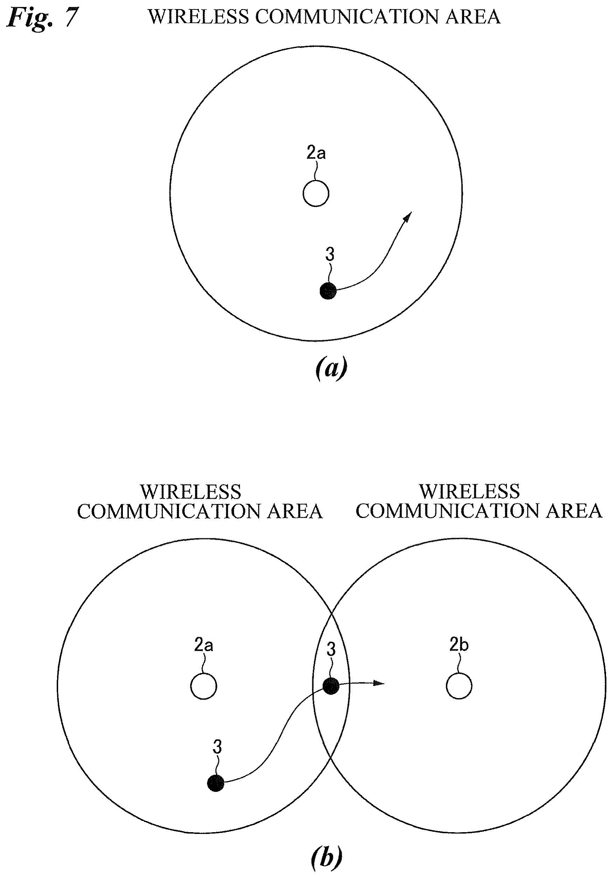

In the estimation of the wireless communication performance, for example, as illustrated in Fig. 7(a), when the mobile body 3 is positioned within a wireless communication area of an access point 2a, the mobile body 3 can be wirelessly connected to and continue wireless communication with the access point 2a in a stable state. In this case, the wireless communication performance between the mobile body 3 and the access point 2a is normal. On the other hand, as illustrated in Fig. 7(b), when the mobile body 3 is positioned near the boundary of the wireless communication area between the access point 2a and an access point 2b, the mobile body 3 is possibly unable to be connected constantly to the access point 2a, and in some cases, it may be connected to the access point 2b side. In this case, the wireless communication performance between the mobile body 3 and the access point 2a is abnormal. When this abnormal state can be detected early, it is possible to switch to the next access point 2 promptly.

The estimation as to whether the wireless communication performance between the mobile body 3 and the access point 2 is normal or abnormal is achieved by measuring the count of transitions between the communication-enabled state and the communication-disrupted state within the threshold calculation period.

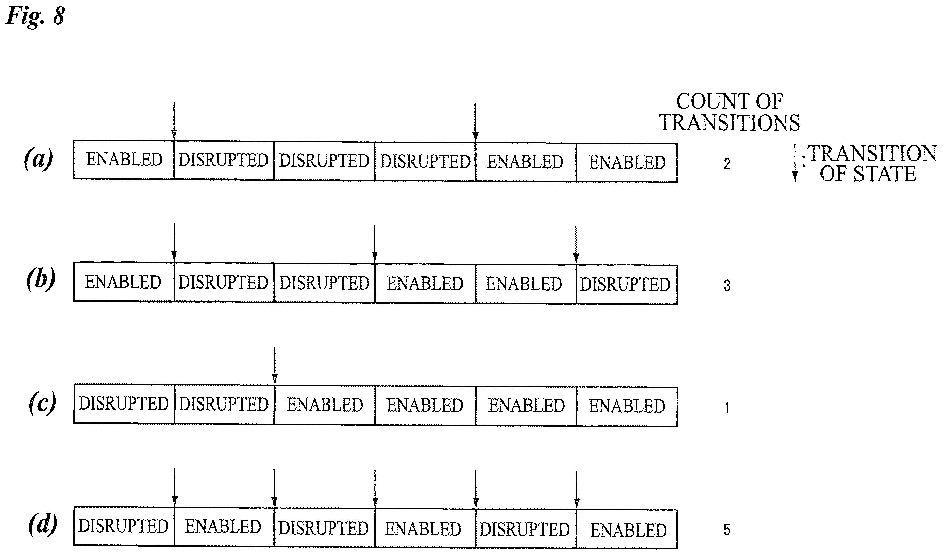

When the threshold calculation period is constituted of six measurement slots, for example, in a form in which the communication-enabled state and the communication-disrupted state transition as illustrated in Fig. 8(a), the count of transitions is 2. In a transition form illustrated in Fig. 8(b), the count of transitions is 3. In a transition form illustrated in Fig. 8(c), the count of transitions is 2. In a transition form illustrated in Fig. 8(d), the count of transitions is 5.

The higher the count of transitions within the threshold calculation period, the higher the frequency of switching between the communication-enabled state and the communication-disrupted state. The mobile body 3 is considered to be positioned near the boundary of the wireless communication area of the access point 2, and the wireless communication performance can be regarded as abnormal. On the other hand, the lower the count of transitions within the threshold calculation period, the more stably the communication-enabled state or the communication-disrupted state continues. Accordingly, the mobile body 3 is not positioned near the boundary of the wireless communication area of the access point 2, and the wireless communication performance can be regarded as normal.

In the example of Fig. 8, the form illustrated in Fig. 8(c) has the least count of transitions, and the wireless communication performance can be regarded as more normal. The form illustrated in Fig. 8(d) has the greatest count of transitions, and the wireless communication performance can be regarded as more abnormal.

In the abnormality estimation unit 42, the estimation of the wireless communication performance is performed through the second threshold. When the count of transitions within the threshold calculation period is equal to or more than the second threshold, the wireless communication performance is estimated to be abnormal. When the count of transitions within the threshold calculation period is less than the second threshold, the wireless communication performance is estimated to be normal.

When the second threshold is "3", in the examples of Figs. 8(b) and 8(d), the wireless communication performance is estimated to be abnormal because the count of transitions is equal to or more than the second threshold. On the other hand, in the examples of Figs. 8(a) and 8(c), the wireless communication performance is estimated to be normal because the count of transitions is less than the second threshold.

Thus, by estimating the wireless communication performance through the second threshold set in advance, the estimation can be achieved unambiguously and efficiently even when the communication-enabled state and the communication-disrupted state are mixed within the threshold calculation period.

When the second threshold is set in the above-described second threshold setting unit 41, the count of transitions is measured within the threshold calculation period while the mobile body 3 is caused to travel in advance. After the first measurement of the count of transitions within the threshold calculation period is completed, the count of transitions within the threshold calculation period is similarly measured for the second and subsequent times. After the count of transitions within the threshold calculation period is measured a plurality of times, the maximum value of the measured counts of transitions is set as the second threshold. When the maximum value of the counts of transitions is 3, 3 may be set as the second threshold. At this time, a value obtained by further adding an offset value to the maximum value of the measured counts of transitions may be set as the second threshold. Adding the offset value can reduce the estimation frequency of abnormalities caused by frequently exceeding the second threshold.

In addition, according to the present invention, based on the estimation result by the abnormality estimation unit 42, the switching control unit 22 mounted in the mobile body 3 may switch and control the access point 2 to wirelessly communicate. In this case, when it is estimated to be abnormal by the abnormality estimation unit 42, the switching control unit 22 switches a wireless communication connection to another access point 2, which is different from the access point 2 to which the wireless communication connection is currently being attempted. On the other hand, when it is estimated to be normal by the abnormality estimation unit 42, the switching control unit 22 continues the wireless communication connection to the access point 2 to which the wireless communication connection is currently being attempted. When the abnormality estimation is performed by the abnormality estimation unit 42 on the access point 2 side, the switching of the wireless communication connection is executed by the switching control unit 21 mutually in conjunction with the switching control unit 22 in the mobile body 3 via the short-range wireless network 7.

Thus, with the present invention, it is possible to identify whether or not the mobile body 3 is positioned near the boundary of the wireless communication area of the access point 2 through the estimated wireless communication performance without causing extra information exchange. In view of this, when the estimated wireless communication performance is abnormal, switching to another access point 2 can be achieved while maintaining communication quality as much as possible and further reducing a period for which wireless communication is disconnected.

### DESCRIPTION OF REFERENCE SIGNS

- 1:: Mobile body wireless communication performance estimation system
- 2:: Access point
- 3:: Mobile body
- 5:: Sensor system
- 7:: Short-range wireless network
- 21, 22:: Switching control unit
- 30:: State determination module
- 31:: Radio wave strength measuring unit
- 32:: First threshold determining unit
- 33:: State identification unit
- 34:: State counter
- 40:: Abnormality determination module
- 41:: Second threshold setting unit
- 42:: Abnormality estimation unit

## Claims

1. A mobile body wireless communication performance estimation system for estimating wireless communication performance of a mobile body relative to respective access points, the mobile body wireless communication performance estimation system comprising:
radio wave strength measuring means that measures radio wave strength of a packet wirelessly communicated mutually between any of the access points and the mobile body;
first threshold determining means that determines whether or not each radio wave strength measured by the radio wave strength measuring means is equal to or more than a first threshold for each of a plurality of packets included in one measurement slot; and
communication state identification means that identifies any of a communication-enabled state or a communication-disrupted state in units of the measurement slots based on a determination result for each packet determined by the first threshold determining means, wherein
the communication state identification means:
identifies a current measurement slot as being in a communication-disrupted state when a previous measurement slot immediately before in chronological order is in a communication-disrupted state and when all packets fall below the first threshold in the current measurement slot as an identification target;
identifies the current measurement slot as being in a communication-enabled state when the previous measurement slot is in a communication-disrupted state and when one or more packets rise to equal to or more than the first threshold in the current measurement slot;
identifies the current measurement slot as being in a communication-enabled state when the previous measurement slot is in a communication-enabled state and when all packets rise to equal to or more than the first threshold in the current measurement slot; and
identifies the current measurement slot as being in a communication-disrupted state when the previous measurement slot is in a communication-enabled state and when no packets rising to equal to or more than the first threshold are received in the current measurement slot.

2. The mobile body wireless communication performance estimation system according to claim 1, comprising:
transition count measuring means that measures a count of transitions between a communication-enabled state and a communication-disrupted state within a threshold calculation period constituted of a plurality of consecutive measurement slots; and
wireless communication performance estimation means that estimates that wireless communication performance is abnormal when a count of transitions measured by the transition count measuring means is equal to or more than a second threshold and estimates that wireless communication performance is normal when the count of transitions is less than the second threshold.

3. The mobile body wireless communication performance estimation system according to claim 2, wherein
the transition count measuring means measures a count of transitions within the threshold calculation period a plurality of times while causing the mobile body to travel in advance and sets a maximum value of measured counts of transitions as the second threshold.

4. The mobile body wireless communication performance estimation system according to claim 3, wherein
the transition count measuring means sets a value obtained by further adding an offset value to a maximum value of measured counts of transitions as the second threshold.

5. The mobile body wireless communication performance estimation system according to claim 2, further comprising
switching control means that switches and controls an access point that wirelessly communicates with the mobile body, based on an estimation result by the wireless communication performance estimation means.

6. A mobile body wireless communication performance estimation method for estimating wireless communication performance of a mobile body relative to respective access points, the mobile body wireless communication performance estimation method comprising:
a radio wave strength measuring step of measuring radio wave strength of a packet wirelessly communicated mutually between any of the access points and the mobile body;
a first threshold determining step of determining whether or not each radio wave strength measured in the radio wave strength measuring step is equal to or more than a first threshold for each of a plurality of packets included in one measurement slot; and
a communication state identification step of identifying any of a communication-enabled state or a communication-disrupted state in units of the measurement slots based on a determination result for each packet determined in the first threshold determining step, wherein
in the communication state identification step,
a current measurement slot is identified as being in a communication-disrupted state when a previous measurement slot immediately before in chronological order is in a communication-disrupted state and when all packets fall below the first threshold in the current measurement slot as an identification target,
the current measurement slot is identified as being in a communication-enabled state when the previous measurement slot is in a communication-disrupted state and when one or more packets rise to equal to or more than the first threshold in the current measurement slot,
the current measurement slot is identified as being in a communication-enabled state when the previous measurement slot is in a communication-enabled state and when all packets rise to equal to or more than the first threshold in the current measurement slot, and
the current measurement slot is identified as being in a communication-disrupted state when the previous measurement slot is in a communication-enabled state and when no packets rising to equal to or more than the first threshold are received in the current measurement slot.
